# EUROPEAN PATENT SPECIFICATION

(11) **EP 1 157 247 B1**
(45) Date of publication and mention of the grant of the patent: **07.04.2004**
(21) Application number: 00909214.9
(22) Date of filing: 18.02.2000
(51) Int. Cl.: F25D 29/00, G05D 23/19

(54) **CONTROLLER AND METHOD FOR CONTROLLING THE TEMPERATURE IN A REFRIGERATOR**
REGLER UND VERFAHREN ZUR REGELUNG DER TEMPERATUR IN EINEM KÜHLSCHRANK
ORGANE DE COMMANDE ET PROCEDE DE REGLAGE DE LA TEMPERATURE D'UN REFRIGERATEUR

(30) Priority: 19.02.1999 EP 99102743
(43) Date of publication of application: 28.11.2001
(73) Proprietor: Ranco Incorporated of Delaware, Wilmington, Delaware 19801-1612 (US)
(72) Inventor: BAILEY, Graham, D-67366 Weingarten (DE); HEGER, Helmut, D-68789 St. Leon-Rot (DE); HIRSCH, Mike, D-68809 Neulussheim (DE)
(74) Representative: HOFFMANN - EITLE
(86) International application number: PCT/EP2000/001363
(87) International publication number: WO 2000/049354

(56) References cited:
- EP-A- 0 099 417
- EP-A- 0 686 818
- GB-A- 2 254 452
- US-A- 4 410 132
- US-A- 5 115 968
- US-A- 5 524 444
- US-A- 5 524 447
- PATENT ABSTRACTS OF JAPAN vol. 018, no. 341 (M-1629), 28 June 1994 (1994-06-28) -& JP 06 082141 A (MATSUSHITA REFRIG CO LTD), 22 March 1994 (1994-03-22)

## Description

The present invention relates to a controller and a method for controlling the temperature in a food compartment of a refrigerator, according to the preamble of claims 1 and 8, respectively. A controller and a method of this kind are known from EP 0 686 818.

From this document a controller for controlling the temperature in a compartment of a refrigerator is known, which addresses the well-known problem that in conventional refrigerator appliances the air temperature within the food compartment shows a strong dependency on the ambient temperature of the refrigerator appliance. Reason for this phenomenon is, that the actual air temperature resulting from the two point control of the evaporator temperature in the food compartment does not only depend on evaporator temperature thresholds Tₒₙ and T_{off} between which the evaporator temperature changes periodically, but furthermore depends on the running time tₒₙ of the compressor and the pause time t_{off} of the compressor. For a high ambient temperature, the running time tₒₙ of the compressor will be larger than for low ambient temperatures. The pause time t_{off} will be higher for low ambient temperatures than for high ambient temperatures. Consequently, for high ambient temperatures the air temperature inside the food compartment tends to be lower than if the ambient temperature is low.

In order to solve this problem, EP 0 686 818 suggests to measure a rate of rise in evaporator temperature when the compressor is switched off. This rate of rise in evaporator temperature is dependent on the dispersion through the appliance insulation. The dispersion in turn depends on the temperature difference between the air temperature inside the food compartment and the ambient temperature of the refrigerator. In EP 0 686 818 the rate of rise in evaporator temperature when the compressor is switched off, is taken to adjust the lower temperature threshold T_{off} in order to compensate the influence of the ambient temperature on the air temperature in the food compartment.

The rate of rise in evaporator temperature is, however, not only dependent on the temperature dispersion through the appliance insulation. This rate of rise of evaporator temperature can be influenced by other factors, particularly the amount of food stored in the food compartment. If the food compartment is fully loaded, the rate of rise in evaporator temperature will be lower than when the food compartment is empty, given the same thermal dispersion, that is, given the same temperature difference between the air in the food compartment and the ambient temperature. For this reason the known solution of compensating the influence of different ambient temperatures is not always accurate.

Accordingly, it is the object of the present invention to provide a controller and a method for controlling the temperature inside a food compartment of a refrigerator which allow to compensate the influence of different ambient temperatures on the air temperature inside the food compartment with increased accuracy.

According to the present invention, this object is solved as defined in claims 1 and 8.

According to the present invention, the ambient temperature is estimated on the basis of a ratio of the rate of rise of evaporator temperature when the compressor is off to the rate of fall of evaporator temperature when the compressor is on.

The present invention is based on the recognition that factors like food load influence the rate of rise of evaporator temperature when the compressor is off in the same way as they influence the rate of fall of evaporator temperature when the compressor is on. Accordingly, an entity which reflects the ratio of the rate of rise of evaporator temperature when the compressor is off to the rate of fall of evaporator temperature when the compressor is on, can be taken as a basis for estimating the thermal dispersion of the food compartment with a reduced influence of factors like the food load.

The thermal dispersion ratio of the rate of rise of evaporator temperature when the compressor is off to rate of fall of evaporator temperature when the compressor is on, can be evaluated in a number of different ways. These rates of rise and fall can be measured either over a constant time period or over a constant temperature change. If these rates of rise and fall are measured over a constant time period, the beginning of the time interval used for measuring a temperature change can be synchronized with that time instant when the compressor is switched off, to measure the rate of rise of evaporator temperature when the compressor is off, and can be synchronized with that time instant when the compressor is switched on, to measure the rate of fall of evaporator temperature when the compressor is on.

If these rates of rise and fall are measured over a constant temperature change, it is advantageous to use the difference between a low temperature threshold, also called cut-out temperature, and a high temperature threshold, also called cut-in temperature, as the temperature change. The high temperature threshold defines a temperature value, which when exceeded by the evaporator temperature, results in that the compressor is switched on. Similarly, if the evaporator temperature falls below the low temperature threshold, the compressor is switched off. Since in this case the temperature change for measuring the rate of rise of evaporator temperature is the same as the temperature change for measuring the rate of fall of evaporator temperature, said ratio of the rate of rise of evaporator temperature when the compressor is off to the rate of fall of evaporator temperature when the compressor is on, can be evaluated from a ratio tₒₙ/t_{off} of the compressor on-time period tₒₙ to the compressor off-time period t_{off}. This evaluation of the thermal dispension ratio is to a large extent independent from factors such as food load. It provides an indication of the thermal dispersion of the food compartment which in turn indicates the ambient temperature of the refrigerator.

An entity equivalent to the ratio tₒₙ/t_{off} is the compressor duty cycle c = tₒₙ/(tₒₙ + t_{off}). Since the compressor duty cycle c can be expressed as a function of tₒₙ/t_{off} alone, also the compressor duty cycle c provides an evaluation of the thermal dispersion ratio indicating the ambient temperature substantially without the influence of the actual food load in the refrigerator compartment.

The thermal dispersion ratio is preferably calculated by the refrigerator control on a continuous basis. That is, preferably each time the compressor changes its operating state from off to on or from on to off, the rate of change of evaporator temperature is evaluated such that each time the operating state of the compressor has changed, an updated thermal dispersion ratio can be evaluated.

According to the present invention, the low temperature threshold and/or the high temperature threshold are adjusted in accordance with the evaluation of the thermal dispersion ratio such that the influence of the ambient temperature on the actual average air temperature within the food compartment can be compensated. This compensation can be achieved by means of only adjusting the low temperature threshold based on the thermal dispersion ratio, or by means of only adjusting the high temperature threshold based on the thermal dispersion ratio, or by means of adjusting both the low temperature threshold and the high temperature threshold on the basis of the thermal dispersion ratio.

The thermal dispersion ratio can be disturbed by factors such as frequent or long refrigerator door openings or the introduction of extremely warm or cold goods. If it is desired to also reduce the influence of these factors, it is advantageous to look for a stabilization of the thermal dispersion ratio before an adjustment of said at least one of the high and low temperature thresholds is made. Whether or not the thermal dispersion ratio has stabilized, can for instance be judged from a number of consecutive evaluations of this ratio and analyzing whether this predetermined number of consecutive evaluations differ from each other by less than a predetermined amount. If a predetermined number of consecutive evaluations of the thermal dispersion ratio does not differ by more than this predetermined amount, said adjustment of thresholds based on the thermal dispersion ratio is enabled, otherwise disabled. A controller implementing this method is advantageous in that it does not require an additional sensor for sensing the door position and needs no more than an input from the existing evaporator temperature sensor and an input from a user adjustable temperature dial for setting a target value of the air temperature within the food compartment.

Preferably, the controller includes a lookup table which contains various thermal dispersion ratios and associated cut-in temperatures and cut-out temperatures for the compressor which have been chosen empirically during development testing of the refrigerator appliance, to suit the particular ambient conditions detected. It is convenient if these ambient temperatures are organized into temperature bands internationally recognized for refrigeration appliances.

A controller according to the present invention is preferably implemented using an appropriately programmed micro-controller.

In the following, preferred embodiments of the present invention will be described with reference to the accompanying drawings. Identical or corresponding elements in the various drawings have been denoted with identical reference numerals.
- Fig. 1: shows a time chart schematically depicting the behaviour of the air temperature in the food compartment, the evaporator temperature and the compressor operating states over time;
- Fig. 2: shows a first embodiment of a controller for controlling a refrigerator according to the present invention;
- Fig. 3: shows a second embodiment of a controller according to the present invention; and
- Fig. 4: shows a third embodiment of a controller according to the present invention.

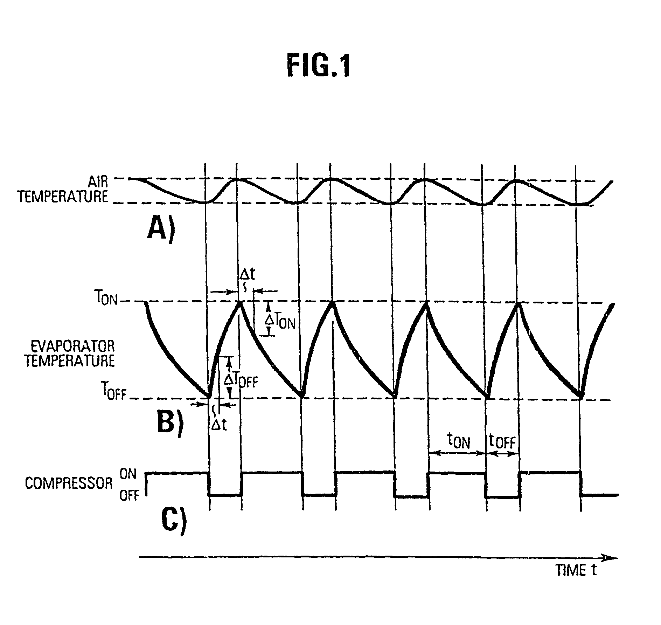

Fig. 1 is a time chart with three curves A, B and C. All three curves use the same time axis t. Curve A shows the behaviour of the air temperature within a food compartment of a refrigerator over time. Curve B shows the behaviour of the temperature of the evaporator in the food compartment over time. Finally, curve C shows the operating states ON and OFF of the compressor in association with the temperature curves A and B.

From Fig. 1 it can be taken that in the course of controlling the average air temperature corresponding to the temperature of the food in the refrigerator compartment, the compressor which circulates cooling fluid through the refrigeration circuit of the refrigerator, switches on when the evaporator temperature has risen to a high temperature value Tₒₙ, called the cut-in temperature. The operation of the compressor results in that the evaporator temperature falls until a low temperature threshold T_{off} is reached which causes the compressor to switch off again. In the off state of the compresssor, the evaporator temperature rises again until the high temperature threshold Tₒₙ has been reached. This cycle repeats periodically.

While the temperature difference Tₒₙ - T_{off} between the high temperature threshold and the low temperature threshold can be substantial, e.g. about 20°C, the resulting cyclic change of the air temperature in the food compartment is much lower, as indicated in curve A of Fig. 1. The average air temperature depends on the high temperature threshold Tₒₙ and on the low temperature threshold T_{off} and furthermore on the duration of each of the operating states of the compressor in each cycle. The present invention is based on the recognition that when the ambient temperature increases, the rate of fall of evaporator temperature when the compressor is on, decreases due to the thermal dispersion of the refrigerator insulation and other reasons. Moreover, the rate of rise of evaporator temperature when the compressor is off, will increase with an increase in the ambient temperature. On the other hand, an increased food load in the compartment will not only slow down the rate of fall of evaporator temperature when the compressor is on but also the rate of rise of evaporator temperature when the compressor is off. Accordingly, a ratio of the rate of rise of evaporator temperature when the compressor is off to the rate of fall of evaporator temperature when the compressor is on, will be a sensitive indication of ambient temperature and will at the same time be insensitive against food load variations.

Fig. 1 indicates one possibility how this thermal dispersion ratio can be evaluated. According to Fig. 1, a temperature difference ΔT_{off} is measured over a predetermined time interval Δt which begins whenever the compressor changes its operating state from on to off. The ratio ΔT_{off}/Δt is an evaluation of the rate of rise of evaporator temperature when the compressor is off. Similarly, a temperature difference ΔTₒₙ is measured over a predetermined time interval Δt which can be of the same length as that used for measuring ΔT_{off}, the interval Δt for measuring ΔTₒₙ beginning when the compressor changes its operating state from off to on. The ratio ΔTₒₙ/Δt is an evaluation of the rate of fall of evaporator temperature when the compressor is off. The ratio of this rate of rise to this rate of fall represents the thermal dispersion ratio indicating the ambient temperature with low sensitivity towards food load variations.

For evaluating this thermal dispersion, the time interval Δt can be kept constant when measuring the change of temperature ΔT_{off} and ΔTₒₙ, or the change of temperature is kept constant and the time interval Δt is measured. According to an advantageous embodiment of the invention, ΔTₒₙ and ΔT_{off} are chosen such that ΔTₒₙ = ΔT_{off} = Tₒₙ - T_{off} = ΔT. From (ΔT/t_{off})/ΔT/tₒₙ) = tₒₙ/t_{off} it is evident that this ratio of the compressor on time to the compressor off time indicates an essentially food load independent thermal dispersion ratio of the refrigerator which is useful for estimating the ambient temperature of the refrigerator.

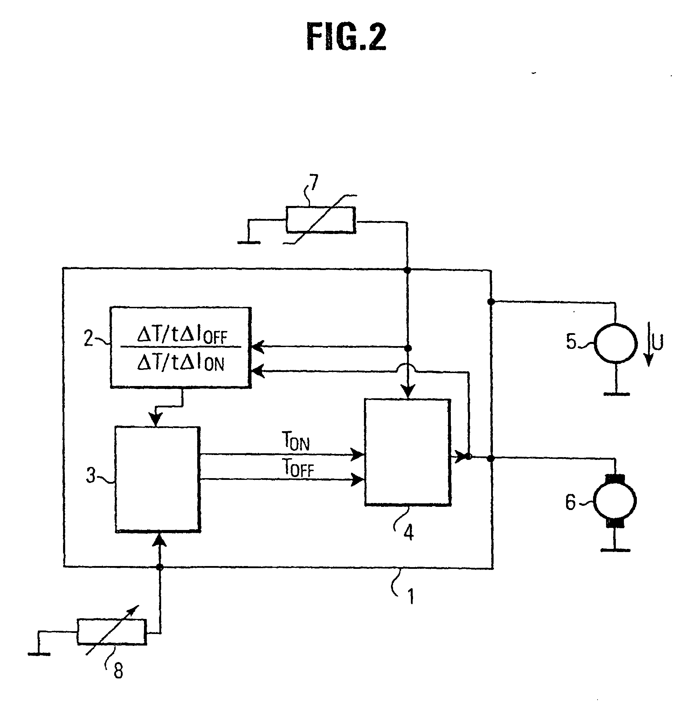

Fig. 2 shows a first embodiment of a controller according to the present invention. In this figure, reference numeral 1 denotes the controller which can be implemented by means of software in a microcontroller. Reference numeral 7 denotes a temperature sensor, for instance a temperature dependent resistor. This temperature sensor is mounted in thermal contact with the evaporator in the food compartment and provides a temperature input to the controller 1. Reference numeral 8 denotes a temperature setting means which is user-adjustable, for presetting a target temperature inside the food compartment. The user-adjustable temperature setting means 8 can be a potentiometer which provides a target temperature input to controller 1. Reference numeral 5 denotes a power supply for the controller 1. Reference numeral 6 represents the compressor which is switched on and off by the controller 1.

Reference numeral 4 denotes a comparator with hysteresis which compares the temperature sensed by the temperature sensor 7 with a high temperature threshold Tₒₙ and with a low temperature threshold T_{off}. As depicted in Fig. 7, the comparator 4 switches on the compressor as soon as the detected evaporator temperature has exceeded Tₒₙ, and switches off the compressor as soon as the detected evaporator temperature falls below T_{off}. Reference numeral 2 denotes a section for evaluating a thermal dispersion ratio based on a ratio of said rate of fall of evaporator temperature when said compressor is off to a rate of rise of temperature when said compressor is on. In order to evaluate this thermal dispersion ratio, section 2 receives the detected evaporator temperature and the operating state of the compressor 6 as inputs. For each of the operating states ON and OFF of the compressor, section 2 evaluates a rate of fall of evaporator temperature and a rate of rise of evaporator temperature, respectively, and evaluates a ratio of these rates each time the compressor 6 has changed its operating state. This ratio generated by section 2 which represents the thermal dispersion ratio of the refrigerator, is received by section 3. This section comprises a database which contains high temperature threshold values and low temperature threshold values for a variety of different values of the thermal dispersion ratio provided by section 2, and for a variety of different target temperature values set by a user.

In this embodiment, section 3 furthermore contains memory locations for storing a predetermined number of most recent thermal dispersion ratios. Each time when section 2 outputs a new thermal dispersion ratio, the oldest of the stored previous thermal dispersion ratios is discarded and replaced by the newest. Section 3 furthermore contains means for judging whether the stored thermal dispersion ratios differ from each other by more than a predetermined amount. If this is the case, section 3 detects an unstable condition, e.g. resulting from frequent or long door openings or the introduction of extremely warm or cold goods. As long as the unstable condition prevails, section 3 will not update the high temperature threshold Tₒₙ and the low temperature threshold Toff output to comparator 4. As soon as the stored thermal dispersion ratios are found by section 3 to differ from each other by less than said predetermined amount, section 3 detects a stable condition. As long as the stable condition prevails, section 3 takes the most recent thermal dispersion ratio provided by section 2, furthermore takes the user-adjusted target temperature provided by setting means 8, reads from its database a low temperature threshold T_{off} and a high temperature threshold Tₒₙ and outputs these thresholds to comparator 4. The database of section 3 can be a table filled with threshold values which have been chosen empirically during development testing under different ambient temperature conditions.

While in the embodiment of Fig. 2, section 3 provides both the low temperature threshold and the high temperature threshold to comparator 4 depending on the set target temperature and the evaluated thermal dispersion ratio, the same effect of compensating the influence of ambient temperature variations on the average air temperature in the food compartment can be obtained if only one of these temperature thresholds, preferably the low temperature threshold, is adjusted by section 3 while the other temperature threshold is kept fixed.

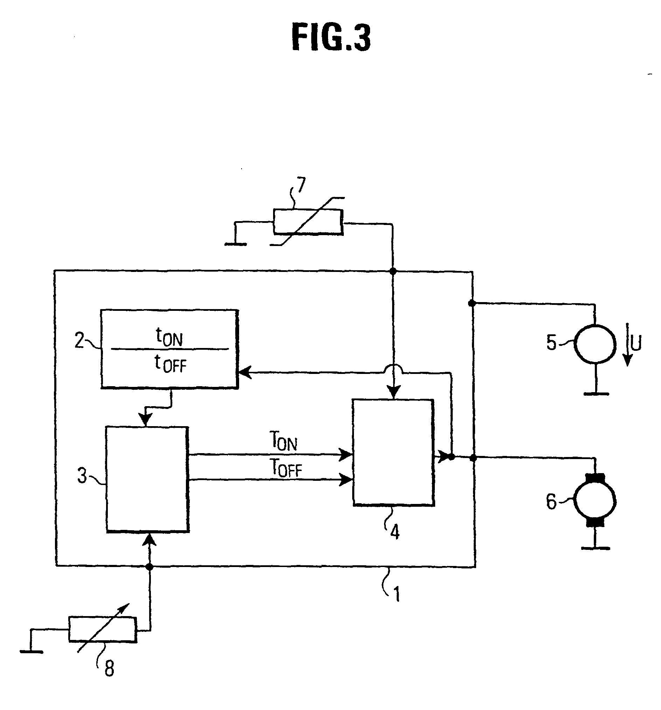

Fig. 3 shows a second embodiment of the present invention. This embodiment differs from the embodiment of Fig. 2 in section 2 for evaluating a thermal dispersion ratio. All other elements of Fig. 3 are not different from the corresponding elements of Fig. 2, such that their description need not be repeated.

According to the embodiment of Fig. 3, the section 2 for evaluating a thermal dispersion ratio based on a ratio of said rate of fall of evaporator temperature when said compressor is off to a rate of rise of temperature when said compressor is on, is constituted to measure the on time tₒₙ of the compressor and the off time t_{off} of the compressor. To this end, section 2 receives information on the current operating status of the compressor 6 from comparator 4. Each time the compressor 6 has changed its operating state, section 2 calculates a ratio tₒₙ/t_{off} for evaluating the thermal dispersion ratio of the refrigerator, and outputs this ratio to section 3. According to this embodiment, section 2 does not require an input from temperature sensor 7 on the evaporator because in this embodiment the evaluation of the thermal dispersion ratio is based on rates of fall and rise of evaporator temperature which in turn are based on the same temperature difference ΔT = Tₒₙ - T_{off}. During normal operation of the refrigerator, this temperature difference remains constant such that the ratio tₒₙ/t_{off} is a reliable evaluation of the thermal dispersion ratio input into section 3.

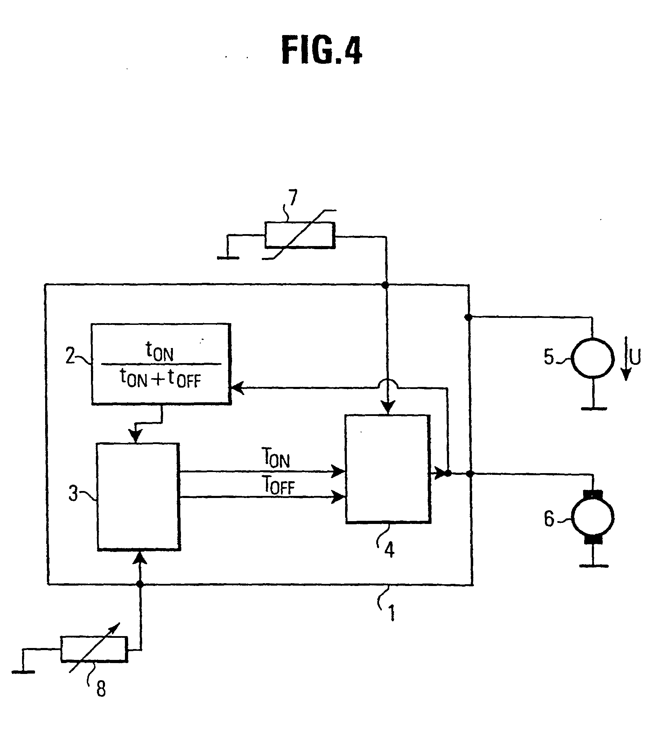

Fig. 4 shows a third embodiment of a controller according to the present invention. This embodiment differs from the embodiment of Fig. 3 only in section 2. All remaining elements are not different from the corresponding elements in Figs. 2 and 3 such that their description need not be repeated.

According to this embodiment, section 2 evaluates a thermal dispersion ratio of the refrigerator based on the duty cycle of the compressor 6. To this end, section 2 receives an indication on the current operating state of compressor 6 from comparator 4. Section 2 measures the on time period tₒₙ of the compressor and the off time period t_{off} of the compressor. Each time the operating state of the compressor has changed, section 2 calculates a new duty cycle from the most recently completed on period and the most recently completed off period of the compressor. The duty cycles calculated by section 2 are input into section 3 as an evaluation of the thermal dispersion ratio of the refrigerator.

A controller according to the present invention is suitable for controlling the temperature in the freshfood compartment, also called fridge compartment of a refrigerator. It is similarly suitable for controlling the temperature in a freezer compartment for storing frozen food, of a refrigerator. A controller is particularly suitable for controlling the temperature in a refrigerator combining a freezer compartment and a fridge compartment. If such a refrigerator has a high compressor and a single refrigeration circuit with a series connection of the evaporator in the fridge compartment and the evaporator in the freezer compartment, and a temperature sensor only on the evaporator of the fridge compartment, the controller is able to maintain the temperature in the freezer compartment essentially stable in different ambient temperature conditions.

The term freezer compartment refers to compartments having at least a one star rating.

A controller according to the present invention can compensate the influence of ambient temperatures on the temperature inside the food compartment of a refrigerator essentially independently from the food load and does not require a separate ambient temperature sensor.

## Claims

1. A controller for controlling the temperature in a food compartment of a refrigerator having an evaporator located in said food compartment and a compressor (6) for circulating cooling fluid through said evaporator, said controller (1) comprising:
- means (8) for receiving a target temperature value from a target temperature setting means for said food compartment;
- means (7) for receiving an actual temperature value of said evaporator in a refrigeration compartment of the refrigerator;
- means (4) for switching on said compressor (6) when the actual temperature exceeds a high temperature threshold (Tₒₙ) and for switching off said compressor (6) when said actual temperature falls below a low temperature threshold (T_{off}), at least one of said temperature thresholds being determined depending on said food compartment target temperature;
- means (3) for compensating a dependency of an average temperature in said food compartment from an ambient temperature of the refrigerator by adjusting said low temperature threshold (T_{off}) and/or said high temperature threshold (Tₒₙ), said compensation means (3) being adapted to measure a rate of rise of evaporator temperature when said compressor is off;
**characterized in that**
- said compensation means (3) is adapted to evaluate a thermal dispersion ratio based on a ratio of said rate of rise of evaporator temperature when said compressor (6) is off, to a rate of fall of temperature when said compressor (6) is on, and to adjust said low temperature threshold (T_{off}) and/or said high temperature threshold (Tₒₙ) in accordance with said thermal dispersion ratio.

2. The controller according to claim 1,
**characterized in that**
- said compensation means (3) is adapted to determine said rate of fall and/or said rate of rise of evaporator temperature by measuring a change of evaporator temperature over a specified period of time (Δt) or by measuring a period of time during which the evaporator temperature changes by a specified amount (ΔT).

3. The controller according to claim 1,
**characterized in that**
- said compensation means (3) is adapted to measure a period tₒₙ when said compressor (6) is on and a period t_{off} when said compressor is off, and to obtain said thermal dispersion ratio from a ratio tₒₙ/t_{off} of said ON time period to said OFF time period.

4. The controller according to claim 1,
**characterized in that**
- said compensation means (3) is adapted to measure a period tₒₙ when said compressor (6) is on and a period t_{off} when said compressor (6) is off, and to obtain said thermal dispersion ratio from a ratio of said Off time period toff to a sum tₒₙ+t_{off} of said ON time period and said OFF time period.

5. The controller according to any one of the preceding claims,
**characterized by**
- look up table means (3) for storing low temperature threshold values and/or high temperature threshold values in association with various values of said thermal dispersion ratio and with food compartment target temperature values;
- said compensation means (3) being adapted to read said low temperature threshold and/or said high temperature threshold from a location in said lookup table indicated by said evaluated thermal dispersion ratio and said food compartment target temperature.

6. The controller according to any of the preceding claims,
**characterized in that**
- said compensation means (3) is adapted to store a predetermined number of consecutively evaluated thermal dispersion ratios; and
- to inhibit an adjustment of said low temperature threshold (T_{off}) and/or said high temperature threshold (Tₒₙ) if said predetermined number of thermal dispersion ratios differ from each other by more than a predetermined variance threshold.

7. The controller according to any of the preceding claims,
**characterized in that**
- at least said compensation means (3) is implemented in a microcontroller.

8. A method of controlling the temperature in a food compartment of a refrigerator having an evaporator located in said food compartment and a compressor (6) for circulating cooling fluid through said evaporator, comprising the steps of
- receiving a target temperature value for said food compartment;
- receiving an actual temperature value of said evaporator in said food compartment of the refrigerator;
- switching on said compressor (6) when the actual temperature exceeds a high temperature threshold (Tₒₙ) and switching off said compressor (6) when said actual temperature falls below a low temperature threshold (T_{off}); at least one of said temperature thresholds being determined depending on said food compartment target temperature;
- measuring a rate of rise of evaporator temperature when said compressor (6) is off and compensating a dependency of the average temperature in said food compartment from an ambient temperature by adjusting said low temperature threshold and/or said high temperature threshold;
**characterized by**
- evaluating a thermal dispersion ratio based on a ratio of said rate of rise of evaporator temperature when said compressor (6) is off, to a rate of fall of temperature when said compressor (6) is on, and adjusting said low temperature threshold (T_{off}) and/or said high temperature threshold (Tₒₙ) in accordance with said thermal dispersion ratio.

## Patentansprüche

1. Steuerung zum Steuern der Temperatur in einem Nahrungsmittelfach einer Kühlvorrichtung mit einem Verdampfer, der in dem Nahrungsmittelfach angeordnet ist, und einem Kompressor (6) zum Zirkulieren von Kühlungsfluid durch den Verdampfer, wobei die Steuerung (1) folgendes aufweist:
- eine Einrichtung (8) zum Empfangen eines Solltemperaturwerts von einer Solltemperatur-Einstelleinrichtung für das Nahrungsmittelfach;
- eine Einrichtung (7) zum Empfangen eines tatsächlichen Temperaturwerts des Verdampfers in einem Kühlfach der Kühlvorrichtung;
- eine Einrichtung (4) zum Einschalten des Kompressors (6), wenn die tatsächliche Temperatur eine hohe Temperaturschwelle (Tₒₙ) übersteigt, und zum Ausschalten des Kompressors (6), wenn die tatsächliche Temperatur unter eine niedrige Temperaturschwelle (T_{off}) abfällt, wobei wenigstens eine der Temperaturschwellen in Abhängigkeit von der Solltemperatur des Nahrungsmittelfachs bestimmt wird;
- eine Einrichtung (3) zum Kompensieren einer Abhängigkeit einer Durchschnittstemperatur im Nahrungsmittelfach von einer Umgebungstemperatur der Kühlvorrichtung durch Einstellen der niedrigen Temperaturschwelle (T_{off}) und/oder der hohen Temperaturschwelle (Tₒₙ), wobei die Kompensationseinrichtung (3) geeignet ist, eine Anstiegsrate einer Verdampfertemperatur zu messen, wenn der Kompressor im Aus-Zustand ist;
**dadurch gekennzeichnet, dass**
- die Kompensationseinrichtung (3) dazu geeignet ist, ein thermisches Dispersionsverhältnis basierend auf einem Verhältnis der Anstiegsrate einer Verdampfertemperatur, wenn der Kompressor (6) im Aus-Zustand ist, zu einer Abfallrate einer Temperatur, wenn der Kompressor (6) im Ein-Zustand ist, zu bewerten und die niedrige Temperaturschwelle (T_{off}) und/oder die hohe Temperaturschwelle. (Tₒₙ) gemäß dem thermischen Dispersionsverhältnis einzustellen.

2. Steuerung nach Anspruch 1,
**dadurch gekennzeichnet, dass**
- die Kompensationseinrichtung (3) dazu geeignet ist, die Abfallrate und/oder die Anstiegsrate einer Verdampfertemperatur durch Messen einer Änderung einer Verdampfertemperatur über eine spezifizierte Zeitperiode (Δt) oder durch Messen einer Zeitperiode, während welcher sich die Verdampfertemperatur um einen spezifizierten Betrag (ΔT) ändert, zu bestimmen.

3. Steuerung nach Anspruch 1,
**dadurch gekennzeichnet, dass**
- die Kompensationseinrichtung (3) dazu geeignet ist, eine Periode (tₒₙ), wenn der Kompressor (6) im Ein-Zustand ist, und eine Periode (t_{off}), wenn der Kompressor im Aus-Zustand ist, zu messen und das thermische Dispersionsverhältnis aus einem Verhältnis (tₒₙ/t_{off}) der EIN-Zeitperiode zu der AUS-Zeitperiode zu erhalten.

4. Steuerung nach Anspruch 1,
**dadurch gekennzeichnet, dass**
- die Kompensationseinrichtung (3) dazu geeignet ist, eine Periode (tₒₙ), wenn der Kompressor (6) im Ein-Zustand ist, und eine Periode (t_{off}), wenn der Kompressor (6) im Aus-Zustand ist, zu messen und das thermische Dispersionsverhältnis aus einem Verhältnis der AUS-Zeitperiode (t_{off}) zu einer Summe (tₒₙ + t_{off}) der EIN-Zeitperiode und der AUS-Zeitperiode zu erhalten.

5. Steuerung nach einem der vorangehenden Ansprüche, **gekennzeichnet durch**
- eine Nachschautabelleneinrichtung (3) zum Speichern von Werten für die niedrige Temperaturschwelle und/oder von Werten für die hohe Temperaturschwelle in Zusammenhang mit verschiedenen Werten des thermischen Dispersionsverhältnisses und mit Solltemperaturwerten des Nahrungsmittelfachs;
- wobei die Kompensationseinrichtung (3) dazu geeignet ist, die niedrige Temperaturschwelle und/oder die hohe Temperaturschwelle aus einer Stelle in der Nachschautabelle zu lesen, die **durch** das bewertete thermische Dispersionsverhältnis und die Solltemperatur des Nahrungsmittelfachs angezeigt wird.

6. Steuerung nach einem der vorangehenden Ansprüche,
**dadurch gekennzeichnet, dass**
- die Kompensationseinrichtung (3) dazu geeignet ist, eine vorbestimmte Anzahl von aufeinander folgend bewerteten thermischen Dispersionsverhältnissen zu speichern; und
- eine Einstellung der niedrigen Temperaturschwelle (t_{off}) und/oder der hohen Temperaturschwelle (tₒₙ) zu verhindern, wenn sich die vorbestimmte Zahl von thermischen Dispersionsverhältnissen von einander um mehr als eine vorbestimmte Varianzschwelle unterscheidet.

7. Steuerung nach einem der vorangehenden Ansprüche,
**dadurch gekennzeichnet, dass**
- wenigstens die Kompensationseinrichtung (3) in einer Mikrosteuerung implementiert ist.

8. Verfahren zum Steuern der Temperatur in einem Nahrungsmittelfach einer Kühlvorrichtung mit einem Verdampfer, der im Nahrungsmittelfach angeordnet ist, und einem Kompressor (6) zum Zirkulieren eines Kühlfluids durch den Verdampfer, welches Verfahren die folgenden Schritte aufweist:
- Empfangen eines Solltemperaturwerts für das Nahrungsmittelfach;
- Empfangen eines aktuellen Temperaturwerts des Verdampfers im Nahrungsmittelfach der Kühlvorrichtung;
- Einschalten des Kompressors (6), wenn die aktuelle Temperatur eine hohe Temperaturschwelle (Tₒₙ) übersteigt, und Ausschalten des Kompressors (6), wenn die aktuelle Temperatur unter eine niedrige Temperaturschwelle (T_{off}) abfällt; wobei wenigstens eine der Temperaturschwellen in Abhängigkeit von der Solltemperatur des Nahrungsmittelfachs bestimmt wird;
- Messen einer Anstiegsrate einer Verdampfertemperatur, wenn der Kompressor (6) im Aus-Zustand ist, und Kompensieren einer Abhängigkeit des Durchschnittswerts im Nahrungsmittelfach von einer Umgebungstemperatur durch Einstellen der niedrigen Temperaturschwelle und/oder der hohen Temperaturschwelle;
**gekennzeichnet durch**
- Bewerten eines thermischen Dispersionsverhältnisses basierend auf einem Verhältnis der Anstiegsrate einer Verdampfertemperatur, wenn der Kompressor (6) im Aus-Zustand ist, zu einer Abfallrate einer Temperatur, wenn der Kompressor (6) im Ein-Zustand ist, und Einstellen der niedrigen Temperaturschwelle (T_{off}) und/oder der hohen Temperaturschwelle (Tₒₙ) gemäß dem thermischen Dispersionsverhältnis.

## Revendications

1. Régulateur pour réguler la température dans un compartiment alimentaire d'un réfrigérateur ayant un évaporateur situé dans ledit compartiment alimentaire et un compresseur (6) pour faire circuler du fluide de refroidissement dans ledit évaporateur, ledit régulateur (1) comprenant :
- un moyen (8) pour recevoir une valeur de température cible à partir d'un moyen de réglage de température cible pour ledit compartiment alimentaire ;
- un moyen (7) pour recevoir une valeur de température réelle dudit évaporateur dans un compartiment de réfrigération du réfrigérateur ;
- un moyen (4) pour commuter sur ledit compresseur (6) lorsque la température réelle dépasse un seuil supérieur de température (Tₒₙ) et pour mettre hors service ledit compresseur (6) lorsque ladite température réelle descend en dessous d'un seuil inférieur de température (T_{off}), au moins un des deux seuils de température étant déterminé en fonction de ladite température cible du compartiment alimentaire ;
- un moyen (3) pour compenser une dépendance d'une température moyenne dans ledit compartiment alimentaire d'une température ambiante du réfrigérateur en ajustant ledit seuil inférieur de température (T_{off}) et/ou ledit seuil supérieur de température (Tₒₙ), ledit moyen de compensation (3) étant conçu pour mesurer un taux d'élévation de température de l'évaporateur lorsque ledit compresseur est hors service ;
**caractérisé en ce que** :
- ledit moyen de compensation (3) est conçu pour évaluer un rapport de dispersion thermique sur la base d'un rapport dudit taux d'élévation de température de l'évaporateur lorsque ledit compresseur (6) est hors service, sur un taux de baisse de température lorsque ledit compresseur (6) est en service, et pour ajuster ledit seuil inférieur de température (T_{off}) et/ou ledit seuil supérieur de température (Tₒₙ) conformément audit rapport de dispersion thermique.

2. Régulateur selon la revendication 1,
**caractérisé en ce que**
- ledit moyen de compensation (3) est conçu pour déterminer ledit taux de baisse et/ou ledit taux d'élévation de température de l'évaporateur en mesurant un changement de température de l'évaporateur sur une période de temps spécifiée (Δt) ou en mesurant une période de temps au cours de laquelle la température de l'évaporateur est modifiée à l'aide d'une valeur spécifiée (ΔT).

3. Régulateur selon la revendication 1,
**caractérisé en ce que**
- ledit moyen de compensation (3) est conçu pour mesurer une période tₒₙ lorsque ledit compresseur (6) est en service et une période t_{off} lorsque ledit compresseur est hors service, et pour obtenir ledit rapport de dispersion thermique à partir d'un rapport tₒₙ / t_{off} de ladite période ON (en service) sur ladite période de temps OFF (hors service).

4. Régulateur selon la revendication 1,
**caractérisé en ce que**
- ledit moyen de compensation (3) est conçu pour mesurer une période tₒₙ lorsque ledit compresseur (6) est en service et une période t_{off} lorsque ledit compresseur (6) est hors service et pour obtenir ledit rapport de dispersion thermique à partir d'un rapport de ladite période de temps OFF t_{off} sur une somme tₒₙ + t_{off} de ladite période de temps ON et de ladite période de temps OFF.

5. Régulateur selon l'une quelconque des revendications précédentes,
**caractérisé par**
- un moyen de table de correspondance (3) pour stocker des valeurs de seuil inférieur de température et/ou des valeurs de seuil supérieur de température en association avec diverses valeurs dudit rapport de dispersion thermique et avec des valeurs de température cible du compartiment alimentaire ;
- ledit moyen de compensation (3) étant conçu pour lire ledit seuil inférieur de température et/ou ledit seuil supérieur de température à partir d'un endroit dans ladite table de correspondance indiqué par ledit rapport de dispersion thermique évalué et ladite température cible du compartiment alimentaire.

6. Régulateur selon l'une quelconque des revendications précédentes,
**caractérisé en ce que**
- ledit moyen de compensation (3) est conçu pour stocker un nombre prédéterminé de rapports de dispersion thermique évalués de manière consécutive ; et
- pour bloquer un ajustement dudit seuil inférieur de température (T_{off}) et/ou dudit seuil supérieur de température (Tₒₙ) si les rapports de dispersion thermique compris dans ledit nombre prédéterminé diffèrent entre eux plus qu'un seuil de variance prédéterminé.

7. Régulateur selon l'une quelconque des revendications précédentes,
**caractérisé en ce qu'**
- au moins ledit moyen de compensation (3) est mis en oeuvre dans un micro-régulateur.

8. Procédé pour réguler la température dans un compartiment alimentaire d'un réfrigérateur ayant un évaporateur situé dans ledit compartiment alimentaire et un compresseur (6) pour faire circuler du fluide de refroidissement dans ledit évaporateur, comprenant les étapes consistant à :
- recevoir une valeur de température cible pour ledit compartiment alimentaire ;
- recevoir une valeur de température réelle dudit évaporateur dans ledit compartiment alimentaire du réfrigérateur ;
- mettre en service ledit compresseur (6) lorsque la température réelle dépasse un seuil supérieur de température (Tₒₙ) et mettre hors service ledit compresseur (6) lorsque ladite température réelle descend en dessous d'un seuil inférieur de température (T_{off}) ; au moins un desdits seuils de température étant déterminé en fonction de ladite température cible du compartiment alimentaire ;
- mesurer un taux d'élévation de température de l'évaporateur lorsque ledit compresseur (6) est hors service et compenser une dépendance de la température moyenne dans ledit compartiment alimentaire d'une température ambiante en ajustent ledit seuil inférieur de température et/ou ledit seuil supérieur de température ;
**caractérisé par** l'étape consistant à
- évaluer un rapport de dispersion thermique sur la base d'un rapport dudit taux d'élévation de température d'évaporateur lorsque ledit compresseur (6) est hors service, sur un taux de baisse de température lorsque ledit compresseur (6) est en service, et ajuster ledit seuil inférieur de température (T_{off}) et/ou ledit seuil supérieur de température (Tₒₙ) conformément audit rapport de dispersion thermique.
